# FASCICULE DE BREVET EUROPEEN

(11) **EP 1 647 084 B1**
(45) Date de publication et mention de la délivrance du brevet: **14.02.2007**
(21) Numéro de dépôt: 04767224.1
(22) Date de dépôt: 01.06.2004
(51) Int. Cl.: H02K 11/02

(54) **ALTERNATEUR COMPORTANT DES MOYENS POUR ELIMINER LES CHARGES ELECTROSTATIQUES ACCUMULEES**
WECHSELSTROMGENERATOR MIT MITTELN ZUR UNTERDRÜCKUNG VON ANGESAMMELTEN ELEKTROSTATISCHEN AUFLADUNGEN
ALTERNATOR COMPRISING MEANS FOR ELIMINATING ACCUMULATED ELECTROSTATIC CHARGES

(30) Priorité: 30.05.2003 FR 0306553
(43) Date de publication de la demande: 19.04.2006
(73) Titulaire: VALEO EQUIPEMENTS ELECTRIQUES MOTEUR, 94017 Créteil Cedex (FR)
(72) Inventeur: PIERRET, Jean-Marie, F-75012 Paris (FR); LEGRAND, Philippe, F-62126 Conteville Les Boulogne (FR); MILLON, François, F-62200 Boulogne sur Mer (FR); CHIOZZI, Philippe, F-94320 Thiais (FR)
(74) Mandataire: Gamonal, Didier
(86) Numéro de dépôt international: PCT/FR2004/001353
(87) Numéro de publication internationale: WO 2006/016008

(56) Documents cités:
- WO-A-97/01200
- DE-A1- 3 511 755
- FR-A- 677 838
- FR-A- 2 807 889
- US-A- 5 988 996

## Description

### DOMAINE DE L'INVENTION

La présente invention concerne un alternateur de véhicule automobile.

### ETAT DE LA TECHNIQUE

L'invention concerne plus particulièrement un alternateur du type de celui décrit et représenté dans le document FR-A-2.807.889 qui comporte des moyens tendant à supprimer l'électricité statique.

Ce document propose notamment un alternateur de véhicule automobile du type comportant :
- un stator porté par un carter comportant un flasque latéral avant et un flasque latéral arrière;
- un rotor dont l'arbre central est monté à rotation à l'intérieur du stator et qui est constitué d'une partie dite magnétique comportant notamment au moins l'arbre, ledit arbre portant une poulie à son extrémité;
- et des moyens visant à éliminer les charges électrostatiques de l'alternateur.

On connaît également des systèmes permettant de décharger l'électricité statique accumulée sur des éléments d'un moteur électrique par un balai spécifique, comme dans la demande de brevet WO 97 01200.

### OBJET DE L'INVENTION

L'invention vise à proposer d'autres moyens simples à mettre en oeuvre pour assurer l'évacuation de l'électricité statique accumulée dans l'alternateur.

Dans ce but, l'invention propose un alternateur, caractérisé en ce que ces moyens consistent en un raccordement électrique permanent entre la poulie et la face latérale externe d'un flasque transversal du carter qui porte un roulement de guidage en rotation du rotor.

Selon d'autres caractéristiques de l'invention :
- lesdits moyens comportent une liaison, électrique permanente, directe ou indirecte, entre le carter et ladite partie magnétique du rotor.
- une extrémité axiale arrière de l'arbre du rotor qui s'étend axialement à l'extérieur du stator, porte une poulie d'entraînement en rotation de l'arbre, et en ce que lesdits moyens assurent une liaison électrique permanente entre la poulie et le carter.
- lesdits moyens comportent un élément conducteur formant frotteur qui intervient entre le carter et la poulie.
- ledit élément conducteur formant frotteur est porté par le carter et frotte sur la poulie.
- la poulie est entraînée en rotation par un élément souple d'entraînement, notamment une courroie ou une chaîne, et en ce que ledit élément conducteur formant frotteur intervient entre le carter et l'élément souple d'entraînement.
- l'élément souple d'entraînement est une courroie dont un bord s'étend latéralement vers l'avant au-delà d'une face latérale de la poulie pour coopérer par frottement avec une portion en vis-à-vis du carter.
- lesdits moyens assurent une liaison électrique permanente entre la poulie et la face latérale externe d'un flasque transversal du carter qui porte un roulement de guidage en rotation du rotor.
- l'arbre du rotor est monté à rotation dans le carter avec interposition radiale d'un roulement, notamment du type à billes, qui assure une liaison électrique permanente directe entre le carter et le tronçon de l'arbre du rotor qui porte la bague intérieure du roulement.
- le roulement comporte un joint d'étanchéité en matériau conducteur qui relie électriquement les bagues intérieure et extérieure du roulement.
- le roulement est rempli d'une graisse lubrifiante qui est chargée en matériau conducteur de l'électricité.

### DESCRIPTION SOMMAIRE DES DESSINS

D'autres caractéristiques et avantages de l'invention apparaîtront à la lecture de la description détaillée qui va suivre pour la compréhension de laquelle on se reportera aux dessins annexés dans lesquels :
- la figure 1 est une vue en coupe axiale partielle d'un alternateur selon l'état de la technique ;
- la figure 2 est une vue à plus grande échelle du détail D2 de la figure qui illustre un aspect de l'invention ;
- la figure 3 est une vue à plus grande échelle du détail D3 de la figure qui illustre un aspect de l'invention.

### DESCRIPTION DE MODES PREFERENTIELS DE REALISATION DE L'INVENTION.

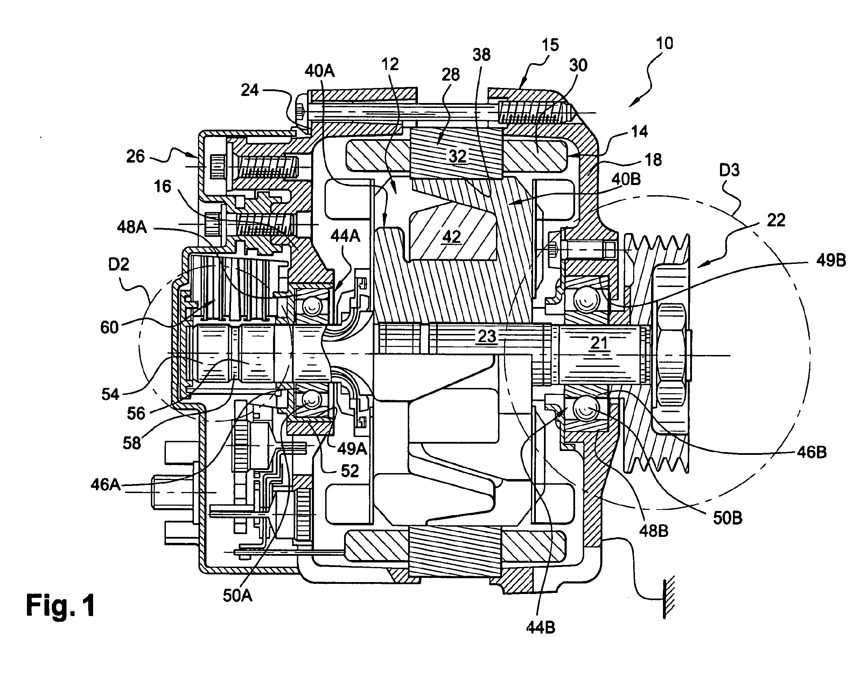

On a représenté sur la figure 1 un alternateur 10 qui comporte essentiellement un rotor 12 qui est entraîné en rotation autour de son axe à l'intérieur d'un stator sensiblement annulaire 14 lui-même fixé à l'intérieur d'un carter 15 sensiblement cylindrique de l'alternateur 10, ici du type de celui décrit et représenté dans le document EP-A-0.515.259 au contenu duquel on pourra se reporter pour plus de détails et précisions.

Le carter 15 est fermé à ses deux extrémités axiales par des flasques transversaux avant 16 et arrière 18 au travers desquels un arbre 21 du rotor est monté à rotation. L'arbre 21 et les flasques 16 et 18 sont en matériau conducteur de l'électricité, notamment en métal. Le carter 15 comprend les flasques transversaux avant 16 et arrière 18.

A son extrémité axiale arrière, l'arbre 21, qui dépasse à l'extérieur du flasque transversal arrière 18, porte une poulie métallique 22 qui est destinée à recevoir une courroie d'entraînement (non représentée à la figure 1) en rotation du rotor 12. En variante non représentée, la courroie est remplacée par une chaîne souple de transmission.

Sur une face externe 24 du palier ou flasque transversal opposé avant 16, un capot de protection 26 recouvre des moyens de régulation et de mise en forme du courant électrique produit par l'alternateur qui comprennent notamment un pont redresseur (ici à diodes non référencées à la figure 1), un régulateur de tension ainsi que des bornes de liaison à un circuit électrique du véhicule.

De manière connue, le stator 14 comporte un corps 32 réalisé sous la forme d'un paquet de tôles 28, qui s'étendent sensiblement radialement et dont chacune est dotée d'encoches pour le passage d'enroulements ou bobinages de fils conducteurs 30 qui forment l'induit de l'alternateur. En variante non représentée, les fils conducteurs enroulés sont remplacés par des conducteurs en forme d'épingle.

Le corps de stator 32 comporte une surface cylindrique interne 38 parfaitement cylindrique qui délimite un espace à l'intérieur duquel le rotor 12 est monté à rotation.

Le rotor 12 à griffes est essentiellement constitué par deux roues polaires identiques 40A, 40B qui sont montées sur la partie cannelée centrale 23 de l'arbre 21 du rotor 12, pour leur entraînement en rotation, et par une bobine ou bobinage 42 agencé entre les roues polaires 40A, 40B métalliques portant chacune un ventilateur interne de refroidissement de l'alternateur.

L'arbre de rotor 21 est monté à rotation dans les flasques 16 et 18 au moyen d'un roulement à billes avant 44A et d'un roulement à billes arrière 44B qui comportent chacun une bague intérieure de roulement 46A, 46B et une bague extérieure de roulement 48A, 48B avec interposition de billes 50A, 50B respectivement.

Chaque composant d'un roulement est réalisé en métal conducteur de l'électricité.

Chaque bague intérieure 46A, 46B est en contact intime avec la surface cylindrique convexe de l'arbre 21 du rotor 12 avec lequel elle est donc aussi en contact électrique.

Comme illustré à la figure 1, la bague extérieure 48B du roulement arrière 44B est montée directement dans un logement correspondant 49B du flasque métallique arrière 18 avec lequel elle est aussi en contact électrique.

Par contre, la bague extérieure 48A du roulement avant 44A est montée dans un logement correspondant 49A du flasque avant 16 avec interposition d'une bague 52 d'amortissement des vibrations qui est généralement en matière plastique isolante de l'électricité.

De manière connue, l'extrémité axiale avant de l'arbre 21 porte deux bagues collectrices avant 54 et arrière 56 qui sont adjacentes et qui sont séparées par un espace axial se présentant sous la forme d'une gorge de séparation 58.

Chacune des bagues collectrices 54 et 56 est conductrice de l'électricité et est prévue pour coopérer avec des balais associés d'un porte-balais 60 logé dans le capot 26. Les bagues collectrices sont reliées, par des liaisons filaires non représentées, aux extrémités du bobinage 42.

La bague avant 54 est traditionnellement au potentiel dit « nul », c'est à dire sensiblement au potentiel de la masse électrique du véhicule à laquelle est notamment relié le stator par les moyens de fixation de l'alternateur sur la structure métallique (non représentée) du véhicule. La bague arrière 56, adjacente au roulement avant 44A, est au potentiel de l'enroulement ou bobinage 42 du rotor, qui par exemple de l'ordre de 14 Volts. Bien évidement, les bagues peuvent être montées dans un ordre inverse.

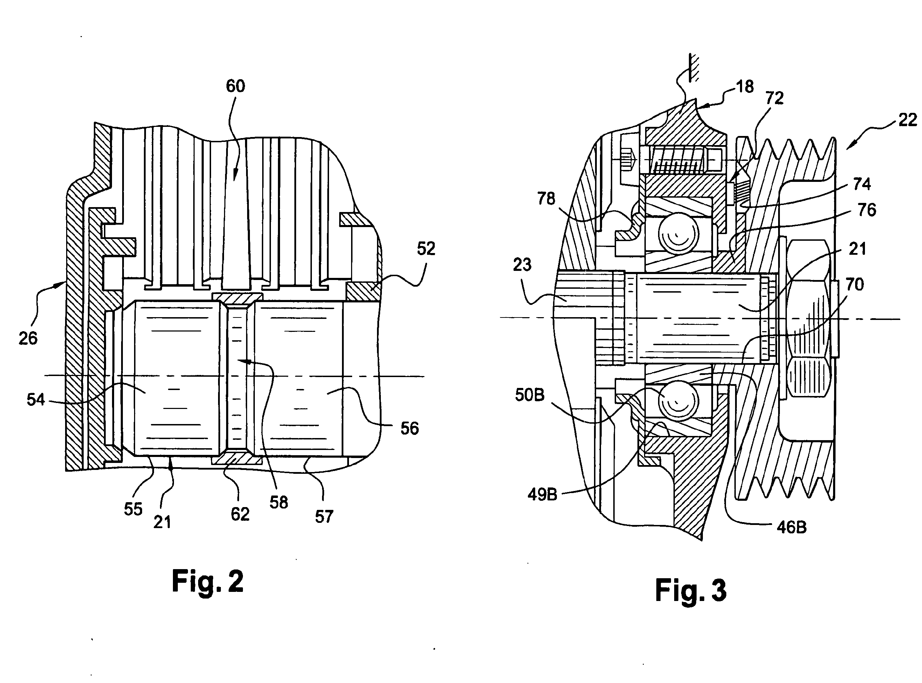

Conformément à l'invention, et comme illustré en détail à plus grande échelle à la figure 2, un jonc ou anneau 62 en matériau conducteur à forte impédance est logé dans la gorge 58 de manière à chevaucher axialement les extrémités axiales adjacentes des surfaces cylindriques convexes externes 55 et 57 des bagues collectrices 54 et 56.

Ainsi, l'anneau 62 assure une liaison électrique résistive permanente de forte impédance entre les deux bagues collectrices adjacentes 54 et 56.

On réalise ainsi une liaison électrique permanente entre le bobinage inducteur 42 et la partie magnétique constituée notamment par l'arbre 21 et les pièces polaires 40A et 40B en matériau ferromagnétique.

Cette liaison électrique est statique puisque l'anneau tourne avec l'arbre 21 et ses deux bagues collectrices 54 et 56.

La résistance de la liaison électrique assurée par le jonc conducteur 62 est suffisamment faible pour permettre l'écoulement des charges électrostatiques de l'alternateur conformément aux enseignements généraux du document FR-A-2.807.889, et suffisamment élevée pour ne pas perturber le fonctionnement de l'alternateur.

On assure ainsi une liaison indirecte permanente résistive de forte impédance entre la partie magnétique du rotor 12 et le potentiel du bobinage inducteur 42 par l'intermédiaire des deux bagues collectrices 54 et 56.

Ainsi, le potentiel électrique de la masse métallique du rotor 12 reste à un potentiel voisin de celui de la masse de l'alternateur, la différence entre ces deux potentiels, par exemple de l'ordre de 0,3 Volt, correspondant à la chute de tension dans le balai provoquée par le courant d'excitation.

Sans sortir du cadre de l'invention, il est souhaitable d'assurer une liaison électrique supplémentaire à forte impédance entre la périphérie du tronçon cannelé 23 de l'arbre 21 qui traverse les pièces polaires 40A et 40B de manière constituer une autre « ligne de fuite électrique » pour les charges électrostatiques accumulées.

De même, il est possible de remplir le roulement arrière 44B avec une graisse de lubrification chargée en particules conductrices de l'électricité de manière à assurer une bonne continuité électrique entre ses bagues extérieure 48B et intérieure 46B, même en cas de centrifugation partielle en fonctionnement.

A titre de variante non représentée, le roulement arrière 44B peut aussi comporter un joint d'étanchéité conducteur, ou d'autres moyens d'étanchéité équivalents, qui coopère avec les deux bagues 46B, 48B du roulement 44B et qui assure lui aussi une fonction de conducteur électrique qui relie électriquement les deux bagues du roulement.

Toutes ces caractéristiques avantageuses du roulement arrière 44B trouvent aussi avantageusement à s'appliquer au roulement avant 44A, à condition que la bague extérieure 48A soit en liaison conductrice avec le flasque avant 16, c'est à dire qu'il n'y ait pas de bague 52 d'amortissement des vibrations ou bien que, avantageusement, cette dernière 52 soit elle aussi réalisée en matériau conducteur de l'électricité, notamment en matériau métallique ou en matériau synthétique chargé de particules conductrices.

Toutes ces solutions sont particulièrement avantageuses lorsqu'il n'est pas possible d'effectuer une dépose de peinture conductrice ou de graphite en bout d'arbre comme dans l'état de la technique qui fait l'objet du document mentionné précédemment.

Il est à noter que le dépôt de peinture ou de revêtement conducteur à l'extrémité axiale avant de l'arbre 21, qui est difficile à réaliser, peut avantageusement être remplacé par un capuchon ou bouchon, non représenté, qui coiffe l'extrémité axiale avant de l'arbre, qui est en matériau conducteur ou qui est revêtu intérieurement d'une couche conductrice et qui chevauche axialement l'extrémité axiale avant de la périphérie convexe 55 de la bague collectrice avant 54.

Conformément à un autre aspect de l'invention, et toujours pour favoriser l'évacuation des charges électrostatiques, il est possible d'assurer une liaison électrique permanente entre l'arbre 21 du rotor 12 et le carter avec ses flasques latéraux, et donc avec la masse électrique du véhicule.

A cet effet, la poulie métallique 22 qui est fixée sur l'arbre 21 avec lequel elle est en liaison électrique permanente par son alésage interne 70 est reliée électriquement en permanence au flasque latéral arrière 18.

De préférence, cette liaison est assurée par un frotteur conducteur 72 porté par le flasque arrière 18 et qui frotte en permanence sur une portion en vis-à-vis de la face latérale avant 74 de la poulie et/ou sur la courroie (non représentée).

A titre de variante, comme le frotteur est une pièce susceptible de s'user, il peut appartenir à la courroie elle-même et frotter sur la face latérale externe du flasque arrière 18.

Il est à noter que la liaison électrique entre la poulie 22 et l'arbre 21 est complétée par la cale 76 de montage par rapport à la bague intérieure 46B qui peut être métallique et conductrice.

Il est aussi possible de prévoir un frotteur, non représenté, entre la bague intérieure 46B et la pièce 78 de retenue de la bague extérieure 48B dans le logement 49B qui se prolonge radialement vers l'intérieur et qui peut avantageusement porter un frotteur qui coopère avec la bague intérieure.

Ce montage permet avantageusement d'évacuer directement les charges électrostatiques provoquées par exemple par l'emploi de certaines courroies d'entraînement de la poulie. Ainsi, la majeure partie des charges électrostatiques passent directement de la poulie vers le carter et la masse du véhicule sans parvenir à l'arbre du rotor au travers des roulements à billes. Le problème de l'évacuation des charges est ainsi résolu en amont, c'est-à-dire à l'endroit même d'apparition de ces charges électrostatiques. Ce montage permet également l'évacuation des charges présentent dans l'arbre du rotor.

On assure alors une liaison électrique tournante supplémentaire entre le carter 15 et la partie magnétique.

Bien entendu, l'alternateur est réversible et il peut être avantageusement utilisé pour démarrer le moteur thermique du véhicule.

## Revendications

1. Alternateur (10) de véhicule automobile du type comportant :
- un stator (14) porté par un carter (15) comportant un flasque latéral avant (16) et un flasque latéral arrière (18),
- un rotor (12) dont l'arbre central (21) est monté à rotation à l'intérieur du stator (16, 18) et qui est constitué d'une partie dite magnétique comportant notamment au moins l'arbre (21), ledit arbre portant une poulie (22) à son extrémité,
- et des moyens visant à éliminer les charges électrostatiques de l'alternateur,
**caractérisé en ce que** ces moyens (72) assurent une liaison électrique permanente entre la poulie (22) et la face latérale externe d'un flasque transversal (18) du carter (15) qui porte un roulement (44B) de guidage en rotation du rotor (12).

2. Alternateur selon la revendication 1, **caractérisé en ce que** l'arbre (21) du rotor est monté à rotation dans le carter avec interposition radiale d'un roulement (44B), notamment du type à billes, qui assure une liaison électrique permanente directe entre le carter (49B) et le tronçon de l'arbre du rotor qui porte la bague intérieure (46B) du roulement (44B).

3. Alternateur selon la revendication précédente, **caractérisé en ce que** le roulement (44A, 44B) comporte un joint d'étanchéité en matériau conducteur qui relie électriquement les bagues intérieure (46A, 46B) et extérieure (48A, 48B) du roulement.

4. Alternateur selon l'une des revendications précédentes, **caractérisé en ce que** le roulement (44A, 44B) est rempli d'une graisse lubrifiante qui est chargée en matériau conducteur de l'électricité.

## Claims

1. Motor vehicle alternator (10) of the type comprising:
- a stator (14) carried by a casing (15) comprising a front lateral flange (16) and a rear lateral flange (18),
- a rotor (12) whose central shaft (21) is mounted for rotation inside the stator (16, 18) and which consists of a so-called magnetic part comprising in particular at least the shaft (21), the said shaft carrying a pulley (22) at its end,
- and means aimed at eliminating the electrostatic charges on the alternator,
**characterised in that** these means (72) consist of a permanent electrical connection between the pulley (22) and the external lateral face of a transverse flange (18) of the casing (15) that carries a bearing (44b) for guiding the rotor (12) in rotation.

2. Alternator according to claim 1, **characterised in that that** rotor shaft (21) is mounted for rotation in the casing with the radial interposing of a bearing (44B), in particular of the ball type, which provides a direct permanent electrical connection between the casing (49B) and the portion of the rotor shaft that carries the internal race (46B) of the bearing (44B).

3. Alternator according to the preceding claim, **characterised in that** the bearing (44A, 44B) comprises a seal made from conductive material that electrically connects the internal (46A, 46B) and external (48A, 48B) races of the bearing.

4. Alternator according to one of the preceding claims, **characterised in that** the bearing (44A, 44B) is filled with a lubricating grease containing electrically conductive material.

## Patentansprüche

1. Wechselstromgenerator (10) für Kraftfahrzeuge, umfassend:
- einen Ständer (14), der an einem Gehäuse (15) angebracht ist, das einen vorderen seitlichen Lagerschild (16) und einen hinteren seitlichen Lagerschild (18) umfasst,
- einen Läufer (12), dessen mittige Welle (21) drehbar im Innern des Ständers (16, 18) gelagert ist und der aus einem sogenannten magnetischen Teil besteht, der zumindest die Welle (21) umfasst, wobei die besagte Welle an ihrem Ende eine Antriebsscheibe (22) trägt,
- und Mittel, deren Aufgabe darin besteht, die elektrostatischen Aufladungen des Wechselstromgenerators zu unterdrücken,
**dadurch gekennzeichnet, dass** diese Mittel (72) eine dauerhafte elektrische Verbindung zwischen der Antriebsscheibe (22) und der äußeren Seitenfläche eines quer angeordneten Lagerschilds (18) des Gehäuses (15) herbeiführen, das ein Wälzlager (44B) für die Drehführung des Läufers (12) trägt.

2. Wechselstromgenerator nach Anspruch 1, **dadurch gekennzeichnet, dass** die Läuferwelle (21) im Gehäuse drehbar unter radialer Einfügung eines Wälzlagers (44B), insbesondere in der Ausführung als Kugellager, gelagert ist, das eine direkte dauerhafte elektrische Verbindung zwischen dem Gehäuse (49B) und dem Teilstück der Läuferwelle herbeiführt, das den Innenring (46B) des Wälzlagers (44B) trägt.

3. Wechselstromgenerator nach dem vorangehenden Anspruch, **dadurch gekennzeichnet, dass** das Wälzlager (44A, 44B) eine Dichtung aus leitendem Material umfasst, das den Innenring (46A, 46B) und den Außenring (48A, 48B) des Wälzlagers elektrisch verbindet.

4. Wechselstromgenerator nach einem der vorangehenden Ansprüche, **dadurch gekennzeichnet, dass** das Wälzlager (44A, 44B) mit einem Schmierfett befüllt ist, dem ein elektrisch leitendes Material zugesetzt ist.
